# EUROPÄISCHE PATENTSCHRIFT

(11) **EP 3 649 581 B1**
(45) Veröffentlichungstag und Bekanntmachung des Hinweises auf die Patenterteilung: **05.04.2023**
(21) Anmeldenummer: 18737914.4
(22) Anmeldetag: 06.07.2018
(51) Int. Cl.: G06K 19/077, G06K 7/08

(54) **VORRICHTUNG UND VERFAHREN ZUR FÄLSCHUNGSSICHERUNG EINES PRODUKTS**
DEVICE AND METHOD FOR PREVENTING COUNTERFEITING OF A PRODUCT
DISPOSITIF ET PROCÉDÉ DE SÉCURISATION D'UN PRODUIT

(30) Priorität: 06.07.2017 DE 102017006389
(43) Veröffentlichungstag der Anmeldung: 13.05.2020
(73) Patentinhaber: Fraunhofer-Gesellschaft zur Förderung der angewandten Forschung e.V., 80686 München (DE)
(72) Erfinder: KUTTER, Christoph, 81541 München (DE); BOSE, Indranil, 80335 München (DE)
(74) Vertreter: Hersina, Günter
(86) Internationale Anmeldenummer: PCT/EP2018/068422
(87) Internationale Veröffentlichungsnummer: WO 2019/008159

(56) Entgegenhaltungen:
- WO-A1-00/14680
- DE-A1- 10 163 267
- DE-A1-102005 032 303
- DE-A1-102013 022 310
- US-A1- 2006 011 449

## Beschreibung

Die Erfindung betrifft eine Vorrichtung zur Fälschungssicherung eines Produkts sowie zur Speicherung von Kryptoinformationen, und insbesondere einen elektronischen Chip in flachen, blattförmigen Gegenständen sowie ein Verfahren zu dessen Betrieb. Ein Beispiel hierfür wäre ein in einem Geldschein eingebetteter elektronischer Chip zur Sicherung des Geldscheins gegen Fälschung.

Generell sind Dokumente, insbesondere amtliche oder anderweitig institutionell ausgestellte Dokumente, wie Reisepässe, Personalausweise, Zeugnisse, aber auch Geldscheine immer wieder Ziel von Fälschungen. Um das Fälschen von derartigen offiziellen Dokumenten sowie Geldscheinen zu verhindern gibt es heutzutage eine Vielzahl von Sicherheitsmerkmalen, die in das jeweilige Dokument beziehungsweise in Geldscheine integriert werden können.

Insbesondere bei Geldscheinen sind bisher jedoch nur selten elektronische Sicherheitsmerkmale realisiert worden, weil die Integrationskosten bis dato zu hoch waren. Ein Geldschein kostet in der Herstellung etwa 8 Euro-Cent. Demnach sollten, um wirtschaftliche Rentabilität bei der Herstellung von Geldscheinen zu wahren, die Kosten einer Systemintegration von elektronischen Komponenten nicht mehr als Zehn Prozent dieser Herstellungskosten betragen.

Eine weitere Problematik ergibt sich bei automatisierten Überprüfungsverfahren zum Überprüfen von Dokumenten und Geldscheinen auf deren Authentizität. Beispielsweise weisen Zählautomaten für Geldscheine Greifer auf, die nacheinander einzelne Geldscheine von einem Stapel von Geldscheinen abnehmen und auf einen anderen Stapel ablegen können. Während dieser Zählphase, beziehungsweise Umstapelphase, steht pro Geldschein nur eine kurze Zeit von typischer Weise 0,025 Sekunden, beziehungsweise 25 ms, zur Verfügung. In dieser Zeit sollte ein Geldschein gezählt, auf Echtheit geprüft und dessen Seriennummer ausgelesen werden.

Es sind zwar kontaktlose Übertragungsverfahren, wie beispielsweise RFID (engl. Radio Frequency Identification) bekannt. Diese Technologien, die Dipolantennen oder Antennenspulen zum berührungslosen Auslesen von RFID Tags aufweisen, benötigen jedoch deutlich mehr Zeit.

Bisherige Versuche konventionelle RFID-Halbleiterchips in Papier, speziell in Geldscheine oder andere sicherheitsrelevante Dokumente, zu integrieren scheitern an der Anforderung, dass deren chip-externe Antenne (Spule oder Dipol) mit Kontaktpads auf dem Chip kontaktiert werden muss. Durch die hohe Beweglichkeit oder den kleinen Biegeradius von Dokumenten und Geldscheinen im Gebrauch delaminieren diese Kontakte und reißen auf.

Um derartige chip-externe Antennen mit dem Chip elektrisch zu verbinden sind darüber hinaus aufwendige und teure Prozessschritte bei der Produktion notwendig. Zudem ist der Aufwand zur genauen Platzierung des Chips relativ zur Antenne groß und die Herstellungskosten steigen dementsprechend. In Veröffentlichungen der deutschen Bundesbank sind die oben erwähnten Problematiken bereits beschrieben worden.

Die US 2006 / 011449 A1 beschreibt einen Schein mit einem papierartig flexiblen Trägerelement, mit einem elektronischen Chip auf und/oder in dem Trägerelement, mit einem in dem Chip monolithisch integrierten Schaltkreis und mit einem in dem Chip monolithisch integrierten Feld-Kopplungs-Element, das zur Wechselwirkung mit einem elektromagnetischen Feld eingerichtet ist und das mit dem integrierten Schaltkreis gekoppelt ist.

Die DE 10 2013 022 310 A1 beschreibt ein RFID-Lesegerät zum Lesen von Daten eines Transponderchips 12. Das RFID-Lesegerät hat einen elektronischen Schaltkreis zum Lesen der Daten und eine Antenne. Die Antenne weist eine elektrisch leitfähige erste Leitung 54 und eine elektrisch leitfähige zweite Leitung 56 auf, die zumindest abschnittsweise parallel verlaufen und die jeweils an einem ersten Ende ihrer Enden mit dem elektronischen Schaltkreis elektrisch gekoppelt sind und die an ihrem zweiten Ende miteinander elektrisch gekoppelt sind.

Die DE 10 2005 032 303 A1 beschreibt einen Transponder zum Empfangen eines elektrischen Signals mit einer Trägerfrequenz, wobei der Transponder eine erste Elektrode und eine zweite Elektrode aufweist, die zusammen eine Kapazität bilden. Der Transponder weist einen Schaltkreis auf, der an die Kapazität parallel angeschlossen ist, sowie eine Induktivität, die parallel zur Kapazität angeschlossen ist. Der Blindwiderstand der Induktivität kompensiert hierbei den Blindwiderstand der Kapazität für die Trägerfrequenz des elektrischen Signals.

Die am Beispiel von Geldscheinen geschilderte Problematik besteht aber generell auch bei anderen offiziellen Dokumenten, die vermehrt Ziel von Fälschungen sind.

Es wäre demnach wünschenswert, eine Vorrichtung zur Fälschungssicherung eines Produkts, und insbesondere von zuvor erwähnten offiziellen Dokumenten und Geldscheinen, bereitzustellen, wobei diese Vorrichtung einfach herstellbar sowie dauerhaft an dem Produkt anbringbar beziehungsweise in das Produkt integrierbar ist, und wobei diese Vorrichtung gleichzeitig eine hohe Robustheit aufweist und dennoch kostengünstig produzierbar ist.

Daher wird eine Vorrichtung zur Fälschungssicherung mit den Merkmalen von Anspruch 1 vorgeschlagen. Ferner wird, gemäß Anspruch 11, die Verwendung einer Vorrichtung mit Mikrochip als Sicherheitsmerkmal in einem Produkt vorgeschlagen. Außerdem wird gemäß Anspruch 12 eine Maschine zum Handhaben einer Vorrichtung und gemäß Anspruch 14 ein Verfahren zum Sichern eines Produkts gegen Fälschung vorgeschlagen. Ausführungsformen und weitere vorteilhafte Aspekte der Vorrichtung, beziehungsweise der Verwendung und des Verfahrens sind in den jeweils abhängigen Patentansprüchen genannt.

Ein Aspekt der Erfindung betrifft eine Vorrichtung zur Fälschungssicherung eines Produkts und/oder zum Speichern von Kryptoinformationen. Die Vorrichtung weist unter anderem einen Mikrochip mit einer kontaktlos auslesbaren integrierten Schaltung auf. Die integrierte Schaltung kann beispielsweise einen Speicher, insbesondere einen nicht flüchtigen Speicher, aufweisen, auf dem ein elektronisches Sicherheitsmerkmal, wie zum Beispiel eine eindeutige Nummer, gespeichert sein kann. Bei dieser Nummer kann es sich beispielsweise um eine fortlaufende Seriennummer oder eine Identifikationsnummer handeln. Auch andere elektronische Sicherheitsmerkmale, die eine Authentifizierung des Produkts erlauben, sind denkbar. Beispielsweise können Kryptoinformationen auf dem Speicher gespeichert werden, welche unter anderem die Authentifizierung von Kryptowährung erlauben. Der Mikrochip weist eine erste Metallisierungsschicht sowie eine zweite Metallisierungsschicht auf, wobei die erste Metallisierungsschicht auf einer ersten Chipseite angeordnet ist, und wobei die zweite Metallisierungsschicht auf einer gegenüberliegenden zweiten Chipseite angeordnet ist. Beide Metallisierungsschichten sind jeweils elektrisch mit der integrierten Schaltung gekoppelt und dienen jeweils als eine Elektrode zum kapazitiven Auslesen der integrierten Schaltung. insbesondere kann hierbei der zuvor angesprochene Speicher der integrierten Schaltung kontaktlos kapazitiv ausgelesen werden. Beim kapazitiven Auslesen werden die als Elektroden dienenden Metallisierungsschichten des Mikrochips in die Nähe einer jeweiligen Gegenelektrode gebracht, wobei die jeweilige Gegenelektrode beispielsweise an einem Lesegerät angeordnet sein kann. Erfindungsgemäß ist der Mikrochip an dem zu authentifizierenden Produkt anordenbar beziehungsweise fixierbar oder in ebendieses Produkt integrierbar. Sofern der Mikrochip in das Produkt integriert ist, kann das Produkt selbst, bzw. ein Material aus dem das Produkt hergestellt ist, den Mikrochip und insbesondere die erste und/oder zweite Metallisierungsschicht zumindest abschnittsweise überdecken. In diesem Fall kann das Produkt bzw. das Material des Produkts, welches die jeweilige Metallisierungsschicht überdeckt, als ein Dielektrikum zwischen der jeweiligen als Elektrode ausgestalteten Metallisierungsschicht und einer entsprechenden Gegenelektrode dienen, um das kontaktlose kapazitive Auslesen der integrierten Schaltung zu ermöglichen. Sofern der Mikrochip an dem Produkt, und insbesondere an einer Außenseite des Produkts, fixiert ist, kann zumindest ein Luftspalt als Dielektrikum zwischen der jeweiligen als Elektrode ausgestalteten Metallisierungsschicht und einer entsprechenden Gegenelektrode dienen, um das kontaktlose kapazitive Auslesen der integrierten Schaltung zu ermöglichen. Die Reichweite beim kapazitiven Auslesen kann deutlich geringer sein als bei herkömmlichen RFID Systemen, die Informationen über Funkwellen und Antennen übertragen. Diese kürzere Reichweite kann jedoch gewünscht sein, um beispielsweise ein unbefugtes Auslesen der integrierten Schaltung zu verhindern. Erfindungsgemäß weist die Vorrichtung eine Fotodiode auf, die elektrisch mit der integrierten Schaltung gekoppelt ist, wobei die integrierte Schaltung ausgestaltet ist, um das kapazitive Auslesen nur dann zu ermöglichen, wenn die Fotodiode Lichtblitze in einer vorbestimmten Reihenfolge, und/oder in einer vorbestimmten Frequenz, und/oder oder in einem vorbestimmten Wellenlängenbereich registriert. Lichtblitze in einer vorbestimmten Reihenfolge können beispielsweise eine vorbestimmte Sequenz von aufeinanderfolgenden Lichtblitzen sein. Unter der vorbestimmten Frequenz der Lichtblitze ist die Häufigkeit des Auftretens von Lichtblitzen zu verstehen. Der vorbestimmte Wellenlängenbereich der Lichtblitze kann sich beispielsweise vom Infrarot, über den sichtbaren Wellenlängenbereich bis hin zu ultraviolettem Licht erstrecken. Die Lichtblitze können vorzugsweise während dem kapazitiven Auslesevorgang erzeugt werden. Die Lichtblitze können beispielsweise von einem Lesegerät abgegeben werden. Das Registrieren derartiger Lichtblitze mittels der zusätzlichen Fotodiode ist ein zusätzlicher Schutzmechanismus zur Fälschungssicherung des Produkts.

Gemäß einem Ausführungsbeispiel kann der Mikrochip derart an dem Produkt fixierbar sein, dass zumindest eine der ersten und zweiten Metallisierungsschichten von einem Abschnitt des Produkts bedeckt ist. In diesem Fall kann also der Mikrochip beispielsweise außenseitig am Produkt angeordnet beziehungsweise fixiert sein. Dabei kann ein Abschnitt des Produkts den Mikrochip, und insbesondere die mindestens eine Metallisierungsschicht, zumindest abschnittsweise bedecken. Ein Abschnitt des Produkts kann ein Teil des Produkts selbst, oder ein an dem Produkt angeordneter oder zu dem Produkt zugehöriger Bestandteil des Produkts sein. Beispielsweise kann das Produkt ein Geldschein sein, wobei die mindestens eine Metallisierungsschicht des Mikrochips beispielsweise von einem Teil des Geldscheins selbst zumindest abschnittsweise bedeckt sein kann. Ebenso denkbar wäre es, dass der Geldschein zum Beispiel ein daran angeordnetes oder integriertes Sicherheitsmerkmal, wie beispielsweise einen Metall- oder Polymerstreifen, ein Wasserzeichen, ein Fenster oder ähnliches aufweist, wobei die mindestens eine Metallisierungsschicht des Mikrochips von ebendiesem Sicherheitsmerkmal zumindest abschnittsweise bedeckt sein kann. Alternativ zu einer Anordnung des Mikrochips an oder auf dem Produkt kann der Mikrochip in das Produkt integriert sein. In einem solchen Fall könnte der Mikrochip derart in dem Produkt integriert sein, dass die erste und die zweite Metallisierungsschicht jeweils vollständig von dem Produkt bedeckt wären. Dabei kann der die Metallisierungsschicht bedeckende Teil des Produkts als ein Dielektrikum zwischen der jeweiligen Metallisierungsschicht und einer entsprechenden Gegenelektrode dienen. Alternativ oder zusätzlich kann ein Luftspalt als zusätzliches Dielektrikum zwischen der jeweiligen Metallisierungsschicht und der entsprechenden Gegenelektrode vorhanden sein. Erfindungsgemäß kann also entweder das Produkt selbst oder ein die erste und/oder zweite Metallisierungsschicht bedeckender Teil des Produkts dazu vorgesehen sein, um bei einem kapazitiven Auslesevorgang ein Dielektrikum zwischen der jeweiligen als Elektrode dienenden Metallisierungsschicht und einer entsprechenden Gegenelektrode bereitzustellen. Demnach berührt bei einem Auslesevorgang die Gegenelektrode des Lesegeräts nicht die jeweilige Metallisierungsschicht. Es wäre aber wohl denkbar, dass die Gegenelektrode bei einem Auslesevorgang das Produkt selbst beziehungsweise den die Metallisierungsschicht bedeckenden Teil des Produkts berührt. In beiden Fällen geschieht das kapazitive Auslesen kontaktlos, wobei sich kontaktlos auf den Kontakt zwischen der jeweiligen als Elektrode dienenden Metallisierungsschicht und einer entsprechenden Gegenelektrode zum Auslesen beziehen kann. Das Produkt selbst kann beispielsweise aus mehreren Lagen Papier bestehen, wobei mindestens eine der Lagen mindestens eine der ersten und zweiten Metallisierungsschichten bedeckt. So kann beispielsweise der Mikrochip beim Schöpfen von Papier in das Papier aufweisende Produkt integriert werden. Der Mikrochip kann vollständig in das Material des Produkts integriert, zum Beispiel einlaminiert sein, was beispielsweise bei Kunststoff aufweisenden Produkten denkbar wäre. Der die Metallisierungsschicht bedeckende Abschnitt des Produkts kann beispielsweise ein an dem Produkt zusätzlich angeordneter Bestandteil des Produkts sein. Beispielsweise kann es sich dabei um einen Aufkleber handeln, der auf dem Produkt aufgeklebt ist und dabei den Mikrochip beziehungsweise die mindestens eine Metallisierungsschicht zumindest abschnittsweise bedeckt. Bei Geldscheinen kann es sich bei dem die mindestens eine Metallisierungsschicht zumindest abschnittsweise bedeckenden Abschnitt beispielsweise um ein an dem Geldschein angeordnetes Sicherheitsmerkmal handeln. Beispielsweise kann ein Polymerstreifen, ein Hologramm, ein Kinegramm, ein Sicherheitsfaden, ein Wasserzeichen, ein Folienelement oder ein beliebiges anderes Sicherheitsmerkmal an dem Geldschein angeordnet sein und den Abschnitt des Geldscheins darstellen, der die mindestens eine Metallisierungsschicht zumindest abschnittsweise bedeckt. Das heißt, die mindestens eine Metallisierungsschicht kann von dem jeweiligen Sicherheitsmerkmal des Geldscheins zumindest abschnittsweise bedeckt sein.

Gemäß einem weiteren Ausführungsbeispiel kann die mindestens eine Metallisierungsschicht vollständig von dem Abschnitt des Produkts bedeckt sein. Somit kann also der als ein Dielektrikum wirkende Abschnitt des Produkts vollflächig um die mindestens eine Metallisierungsschicht herum ausgebildet werden, was wiederum der Qualität des kapazitiven Auslesens zu Gute kommt. Ferner kann hierüber ein zusätzlicher mechanischer Schutz der mindestens einen Metallisierungsschicht sowie des gesamten Mikrochips bereitgestellt werden.

Gemäß einem weiteren Ausführungsbeispiel kann die auf der ersten Chipseite angeordnete erste Metallisierungsschicht mit einem ersten elektrischen Kontakt der integrierten Schaltung gekoppelt sein, und die auf der zweiten Chipseite angeordnete zweite Metallisierungsschicht kann mit einem zweiten elektrischen Kontakt der integrierten Schaltung gekoppelt sein. Somit können beispielsweise eine positiv und eine negativ geladene Elektrode bereitgestellt werden. Dabei können der erste und der zweite elektrische Kontakt der integrierten Schaltung auf der ersten Chipseite angeordnet sein, und der Mikrochip kann eine sich zwischen der ersten und der zweiten Chipseite erstreckende Durchkontaktierung aufweisen, wobei die auf der zweiten Chipseite angeordnete zweite Metallisierungsschicht mittels dieser Durchkontaktierung mit dem auf der ersten Chipseite angeordneten zweiten elektrischen Kontakt gekoppelt sein kann. Mittels dieser Durchkontaktierung ergibt sich eine platzsparende Möglichkeit zur elektrischen Kontaktierung der zweiten Metallisierungsschicht, auch wenn diese auf der den elektrischen Kontakten gegenüberliegenden Chipseite des Mikrochips angeordnet sein sollte.

Gemäß einem weiteren Ausführungsbeispiel kann ein die erste Metallisierungsschicht bedeckender Teil des Produkts auf einer ersten Seite des Produkts angeordnet sein, und ein die zweite Metallisierungsschicht bedeckender Teil des Produkts kann auf einer der ersten Seite gegenüberliegenden zweiten Seite des Produkts angeordnet sein. Das heißt, die erste Metallisierungsschicht kann einer ersten Seite des Produkts zugewandt und mit einem auf dieser ersten Produktseite angeordneten Teil beziehungsweise Abschnitt des Produkts bedeckt sein. Die zweite Metallisierungsschicht hingegen kann einer zweiten Seite des Produkts zugewandt und mit einem auf dieser zweiten Produktseite angeordneten Teil beziehungsweise Abschnitt des Produkts bedeckt sein. Insbesondere bei dünnen, blattförmigen Produkten, wie bei Dokumenten und Geldscheinen, kann die erste Metallisierungsschicht dabei parallel zu der ersten Seite des Produkts, und die zweite Metallisierungsschicht parallel zu der der ersten Seite gegenüberliegenden zweiten Seite des Produkts angeordnet sein. Somit ist auf beiden Seiten des Produkts jeweils eine als Elektrode dienende Metallisierungsschicht vorhanden, sodass die integrierte Schaltung von beiden Seiten des Produkts ausgelesen werden kann. Beim Anlegen einer Wechselspannung kann das kapazitive Auslesen sogar unabhängig von der Ausrichtung des Produkts erfolgen.

Gemäß einem weiteren Ausführungsbeispiel kann die erste Metallisierungsschicht die erste Chipseite zumindest teilweise bedecken, oder die erste Metallisierungsschicht kann die erste Chipseite vollständig bedecken. Alternativ oder zusätzlich kann die zweite Metallisierungsschicht die zweite Chipseite zumindest teilweise bedecken, oder die zweite Metallisierungsschicht kann die zweite Chipseite vollständig bedecken. Eine teilweise Bedeckung der jeweiligen Chipseite führt zu Materialeinsparungen und zu einer kostengünstigeren Herstellung des Mikrochips. Eine vollständige Bedeckung der jeweiligen Chipseite führt zu einer größeren effektiven Elektrodenfläche und somit zu einer verbesserten Qualität des kapazitiven Auslesens.

Gemäß einem weiteren Ausführungsbeispiel kann die Vorrichtung antennenlos ausgeführt sein, wobei sich antennenlos insbesondere auf Mikrochip-externe Antennen bezieht. Das heißt, die Vorrichtung kann derart ausgestaltet sein, dass sie keine Mikrochip-externe Antenne aufweist. Dies unterscheidet die erfindungsgemäße Vorrichtung deutlich von RFID-Chips nach dem Stand der Technik. Im Stand der Technik sind Mikrochip-externe Antennen vorgesehen, die mit den Kontaktpads des RFID-Mikrochips verbunden werden. Diese Anschlüsse neigen jedoch bei Integration in flexiblen Produkten dazu, zu delaminieren und aufzureißen. In der erfindungsgemäßen Vorrichtung hingegen können die Metallisierungsschichten direkt auf der ersten beziehungsweise zweiten Chipseite, zum Beispiel unter Anwendung eines Abscheideverfahrens, angeordnet werden. Das heißt, die als Elektroden dienenden Metallisierungsschichten können in den Mikrochip integriert werden. Die Metallisierungsschichten können somit eine kapazitive Antenne bilden, wobei diese kapazitive Antenne, im Gegensatz zu zuvor beschriebenen Mikrochip-externen Antennen, in den Mikrochip integriert sein kann. Die aufwändige und wenig robuste Kontaktierung von Mikrochip-externen Antennen wird gemäß diesem Ausführungsbeispiel vermieden, was zu einer deutlichen Steigerung der Robustheit und Haltbarkeit führt.

Gemäß einem weiteren Ausführungsbeispiel kann die Vorrichtung derart ausgestaltet sein, dass das kontaktlose kapazitive Auslesen der integrierten Schaltung eine Reichweite von unter 10 mm, und vorzugsweise von unter 1 mm aufweist. Diese geringe Reichweite unterscheidet sich ebenfalls vom Stand der Technik, bei welchem eine integrierte Schaltung mittels Funkwellen und Antennen ausgelesen wird. Bei derartigen konventionellen Systemen ist eine große Reichweite gewünscht. Bei der erfindungsgemäßen Vorrichtung hingegen ist eine kurze Reichweite von unter 10 mm, oder vorzugsweise von unter 1 mm, gewünscht. Dies führt einerseits zu einer deutlichen Energieeinsparung gegenüber konventionellen Systemen. Andererseits kann ein unbefugtes Auslesen der integrierten Schaltung auf derart kurze Distanzen effektiv vermieden werden.

Gemäß einem weiteren Ausführungsbeispiel kann das zu authentifizierende Produkt blattförmig ausgebildet sein und Papier und/oder Kunststoff aufweisen. Nicht limitierende Beispiele hierfür können sein: ein offizielles Dokument, wie beispielsweise ein Reisepass oder ein Zeugnis, oder ein Geldschein, oder eine Berechtigungskarte, wie beispielsweise ein Ticket für ein Konzert oder ein Fußballspiel, oder ein Skipass, oder eine Geldkarte, oder eine Zutrittsberechtigungskarte. Gemäß einem weiteren Ausführungsbeispiel kann das Produkt ein ganz spezielles Papier aufweisen, nämlich ein Papier, das zum Druck von Dokumenten und/oder Wertpapieren und/oder Geldscheinen verwendet wird. Dieses Papier darf nur in speziell legitimierten Druckereien verarbeitet werden. Ein Mikrochip, der in einem Produkt integriert ist, welches nicht ein solches spezielles Papier aufweist, kann daher als ein gefälschter Chip identifiziert werden.

Gemäß einem weiteren Ausführungsbeispiel kann die integrierte Schaltung einen Datenspeicher aufweisen, wobei der Datenspeicher mehrfach beschreibbar und/oder auslesbar, aber nicht überschreibbar und/oder löschbar, ist. Der Datenspeicher kann insbesondere zum Speichern von Kryptoinformationen dienen. Der Vorteil dieser Ausgestaltung des Datenspeichers besteht darin, dass Daten vorzugsweise lediglich hinzugefügt werden können. Das heißt, neue Daten können zu älteren, bereits auf dem Datenspeicher vorhandenen Daten, hinzugefügt werden. Die älteren Daten können dabei auf dem Datenspeicher verbleiben. Der Datenspeicher wäre in diesem Fall nicht überschreibbar. Dies kann zur Fälschungssicherung eines Produkts, das die erfindungsgemäße Vorrichtung aufweist, genutzt werden. Beispielsweise kann der Datenspeicher bei der Herstellung des Produkts mit Herstellungsdaten (z.B. Hersteller, Seriennummer, Datum) beschrieben werden. Beim Transport kann der Datenspeicher mit Transportdaten (z.B. Speditionsunternehmen, Land, Datum) beschrieben werden. Bei Ankunft am Ziel kann der Datenspeicher mit entsprechenden Zieldaten (z.B. Käufer, Land, Datum) beschrieben werden. Aufgrund der Tatsache dass der Datenspeicher nicht löschbar ausgestaltet sein kann, kann die Historie des Produkts nachverfolgt werden. Aufgrund der Tatsache dass der Datenspeicher nicht überschreibbar ausgestaltet sein kann, kann das Produkt effektiv vor Fälschung gesichert werden, da die ursprünglichen Daten dauerhaft auf dem Datenspeicher gespeichert bleiben.

Ein weiterer Aspekt der Erfindung betrifft die Verwendung eines Mikrochips als Sicherheitsmerkmal in einem Produkt. Ein solches Sicherheitsmerkmal kann als eine Fälschungssicherung für ein Produkt verwendet werden. Gemäß den oben beschriebenen Ausführungsbeispielen kann der Mikrochip eine kontaktlos auslesbare integrierte Schaltung sowie eine auf einer ersten Chipseite des Mikrochips angeordnete Metallisierungsschicht und eine auf der gegenüberliegenden zweiten Chipseite des Mikrochips angeordnete zweite Metallisierungsschicht aufweisen. Die beiden Metallisierungsschichten können jeweils elektrisch mit der integrierten Schaltung gekoppelt sein und als Elektrode zum kapazitiven Auslesen der integrierten Schaltung dienen. Der Mikrochip kann an dem Produkt fixiert sein, und mindestens eine der ersten und zweiten Metallisierungsschichten kann zumindest abschnittsweise von einem Abschnitt des Produkts bedeckt sein. Alternativ kann der Mikrochip in das Produkt integriert sein, und beide Metallisierungsschichten können vollständig von dem Produkt selbst bedeckt sein. Prinzipiell kann der Mikrochip, der hier verwendet wird, ein Mikrochip mit einem oder mehreren Merkmalen der zuvor beschriebenen Ausführungsbeispiele sein. Demnach sind alle von Anspruch 1 abhängigen Ansprüche auch mit der in Anspruch 11 definierten Verwendung einer Vorrichtung mit Mikrochip kombinierbar.

Ein weiterer Aspekt der Erfindung betrifft eine Maschine zum Prozessieren beziehungsweise Handhaben eines Produkts, das eine oben beschriebene Vorrichtung aufweist. Die Maschine kann eine erste Handhabungsvorrichtung und eine gegenüberliegend angeordnete zweite Handhabungsvorrichtung aufweisen, wobei jeweils die erste beziehungsweise zweite Handhabungsvorrichtung beim Handhaben des Produkts einer ersten beziehungsweise zweiten Seite des Produkts gegenüberliegend anordenbar sind. Bei den Handhabungsvorrichtungen kann es sich beispielsweise um einen Arm oder einen Greifer handeln. Sowohl die erste als auch die zweite Handhabungsvorrichtung können jeweils einen Metall aufweisenden Bereich aufweisen, der beim Handhaben des Produkts zumindest abschnittsweise mit jeweils der ersten beziehungsweise zweiten Metallisierungsschicht des Mikrochips örtlich überlagert sein kann. Der jeweilige Metall aufweisende Bereich der jeweiligen Handhabungsvorrichtung kann als eine entsprechende Gegenelektrode zu einer jeweiligen Metallisierungsschicht (Elektrode) des Mikrochips zum Auslesen der integrierten Schaltung dienen. Die erste und/oder zweite Metallisierungsschicht des Mikrochips kann hierbei zumindest abschnittsweise von dem Produkt oder von einem Abschnitt des Produkts bedeckt sein, wobei dieser die jeweilige Metallisierungsschicht bedeckende Teil des Produkts als ein Dielektrikum dienen kann. Alternativ oder zusätzlich kann ein Luftspalt zwischen der jeweiligen Metallisierungsschicht und einer entsprechenden Gegenelektrode als Dielektrikum dienen. Somit kann also zwischen dem Metall aufweisenden Bereich der jeweiligen Handhabungsvorrichtung (Gegenelektrode) und der entsprechenden Metallisierungsschicht (Elektrode) des Mikrochips ein Dielektrikum angeordnet sein. Beim Auslesen der integrierten Schaltung können der jeweilige Metall aufweisende Bereich der jeweiligen Handhabungsvorrichtung und die jeweilige Metallisierungsschicht des Mikrochips derart zueinander ausgerichtet sein, dass sich diese zumindest abschnittsweise gegenüberliegen, beziehungsweise örtlich überlagern. Das heißt der Metall aufweisende Bereich der ersten Handhabungsvorrichtung kann der ersten Metallisierungsschicht des Mikrochips gegenüberliegend angeordnet sein, und der Metall aufweisende Bereich der zweiten Handhabungsvorrichtung kann der zweiten Metallisierungsschicht des Mikrochips gegenüberliegend angeordnet sein. In einem Ausführungsbeispiel kann der jeweilige Metall aufweisende Bereich der jeweiligen Handhabungsvorrichtung etwa dieselbe Fläche aufweisen wie die jeweilige Metallisierungsschicht des Mikrochips. Um Toleranzen beim Positionieren der jeweiligen Handhabungsvorrichtung relativ zu dem im bzw. am Produkt angeordneten Mikrochip zu ermöglichen, kann der jeweilige Metall aufweisende Bereich der jeweiligen Handhabungsvorrichtung eine größere Fläche (zum Beispiel eine fünffach, oder sogar eine zehnfache größere Fläche) aufweisen als die jeweilige Metallisierungsschicht des Mikrochips. Erfindungsgemäß weist die Maschine einen Lichtemitter zum Aussenden der oben erwähnten Lichtblitze auf.

Gemäß einem weiteren Ausführungsbeispiel kann die Maschine ein Geldzählautomat und das Produkt ein Geldschein sein. Beim Zählen der Geldscheine in einem Geldzählautomat bewegen sich die zu zählenden Geldscheine mit einer geringen Beabstandung an der jeweiligen Handhabungsvorrichtung vorbei. Das heißt, die Geldscheine fliegen berührungslos an den Greifern vorbei. Sofern der Geldschein eine erfindungsgemäße Vorrichtung aufweist, kann die integrierte Schaltung kontaktlos kapazitiv ausgelesen werden.

Ein weiterer Aspekt der Erfindung betrifft ein Verfahren, zum Sichern eines Produkts gegen Fälschung. Das Verfahren weist unter anderem einen Schritt des Bereitstellens eines Mikrochips mit einer kontaktlos kapazitiv auslesbaren integrierten Schaltung, einer auf einer ersten Chipseite des Mikrochips angeordneten ersten Metallisierungsschicht und einer auf einer gegenüberliegenden zweiten Chipseite angeordneten zweiten Metallisierungsschicht auf. Die erste und zweite Metallisierungsschicht sind jeweils elektrisch mit der integrierten Schaltung gekoppelt und dienen jeweils als Elektrode zum kapazitiven Auslesen der integrierten Schaltung. Ferner weist das Verfahren einen Schritt des Fixierens des Mikrochips an dem Produkt oder einen Schritt des Integrierens des Mikrochips in das Produkt auf. Das Verfahren weist ferner einen Schritt des Bereitstellens einer Fotodiode auf, die elektrisch mit der integrierten Schaltung gekoppelt ist, wobei die integrierte Schaltung ausgestaltet ist, um das kapazitive Auslesen nur dann zu ermöglichen, wenn die Fotodiode Lichtblitze in einer vorbestimmten Reihenfolge und/oder in einer vorbestimmten Frequenz und/oder in einem vorbestimmten Wellenlängenbereich registriert. Prinzipiell kann der Mikrochip, der hier verwendet wird, ein Mikrochip mit einem oder mehreren Merkmalen der zuvor beschriebenen Ausführungsbeispiele sein. Demnach sind alle von Anspruch 1 abhängigen Ansprüche auch mit dem in Anspruch 14 definierten Verfahren kombinierbar.

Die in Anspruch 1 beanspruchte Vorrichtung kann beispielsweise in Form eines RFID-Chips zur Einbettung in ein blattförmiges Dokument ausgestaltet sein, mit zwei gegenüberliegenden Metallflächen wobei die Metallflächen mit zwei Kontakten des Chips verbunden sind.

Ein solcher RFID-Chip kann in das Papier eines blattförmigen Dokuments integriert sein und hierbei keine berührenden Kontaktierungsbereiche aufweisen.

Die in Anspruch 12 beanspruchte Maschine kann in Form einer Vorrichtung zum Zählen und Prüfen von blattförmigen Dokumenten, insbesondere Geldscheine, ausgestaltet sein, aufweisend zwei Greifer, die mit Gegenelektroden ausgestattet sind und die im Bereich der Metallisierungen des Chips angeordnet sind.

Das in Anspruch 14 beanspruchte Verfahren kann ein Auslesen einer Information aus wenigstens einem in wenigstens ein blattförmiges Dokument eingebetteten RFID-Chip beinhalten, wobei an Greifern angeordnete Gegenelektroden mittels kapazitiver Kopplung an Metallisierungen des RFID-Chips gekoppelt sind und mittels kapazitiver Kopplung Informationen aus dem RFID-Chip ausgelesen werden.

Einige Ausführungsbeispiele sind exemplarisch in der Zeichnung dargestellt und werden nachstehend erläutert. Es zeigen:
- Fig. 1A: eine schematische seitliche Schnittansicht einer Vorrichtung gemäß einem Ausführungsbeispiel,
- Fig. 1B: eine schematische Draufsicht eines Produkts, das mit einer Vorrichtung gemäß einem Ausführungsbeispiel ausgestattet ist,
- Fig. 2: eine schematische seitliche Schnittansicht einer Vorrichtung gemäß einem weiteren Ausführungsbeispiel,
- Fig. 3: eine schematische seitliche Schnittansicht einer Vorrichtung gemäß einem Ausführungsbeispiel, wobei die Vorrichtung in einem Produkt integriert ist,
- Fig. 4A: eine schematische seitliche Schnittansicht einer Vorrichtung gemäß einem Ausführungsbeispiel, wobei die Vorrichtung zumindest abschnittsweise in einem Produkt integriert und mit einem Abschnitt des Produkts bedeckt ist,
- Fig. 4B: eine schematische seitliche Schnittansicht einer Vorrichtung gemäß einem Ausführungsbeispiel, wobei die Vorrichtung an einer Oberfläche des Produkts angeordnet und von einem Abschnitt des Produkts bedeckt ist,
- Fig. 5: eine schematische Ansicht eines Teils einer Maschine zum Handhaben eines mit einer erfindungsgemäßen Vorrichtung ausgestatteten Produkts gemäß einem Ausführungsbeispiel,
- Fig. 6: eine schematische seitliche Schnittansicht einer Vorrichtung gemäß einem weiteren Ausführungsbeispiel, und
- Fig. 7: ein Blockdiagramm eines Verfahrens zum Sichern eines Produkts gegen Fälschung gemäß einem Ausführungsbeispiel.

Im Folgenden werden Ausführungsbeispiele mit Bezug auf die Figuren näher beschrieben, wobei Elemente mit derselben oder ähnlichen Funktion mit denselben Bezugszeichen versehen sind.

Verfahrensschritte, die in einem Blockdiagramm dargestellt und mit Bezugnahme auf das selbige erläutert werden, können auch in einer anderen als der abgebildeten beziehungsweise beschriebenen Reihenfolge ausgeführt werden. Außerdem sind Verfahrensschritte, die ein bestimmtes Merkmal einer Vorrichtung betreffen mit ebendiesem Merkmal der Vorrichtung austauschbar, was ebenso anders herum gilt.

Außerdem wird hierin an einigen Stellen ein Geldschein als ein nicht limitierendes Beispiel für ein Produkt, welches vor Fälschung gesichert werden kann, beschrieben. Es können jedoch auch andere Produkte denkbar sein, die mittels des erfindungsgemäßen Konzepts vor Fälschung gesichert werden können.

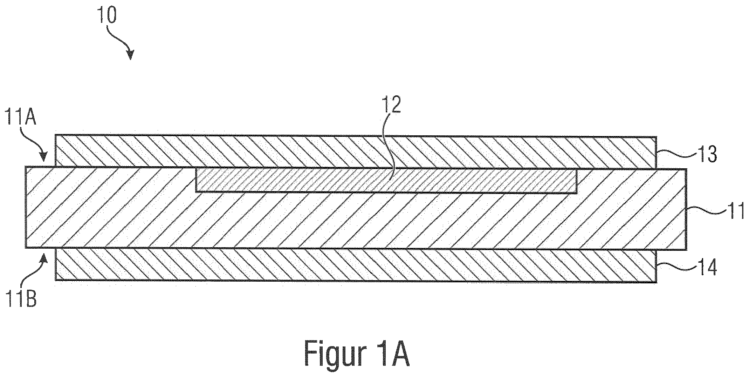

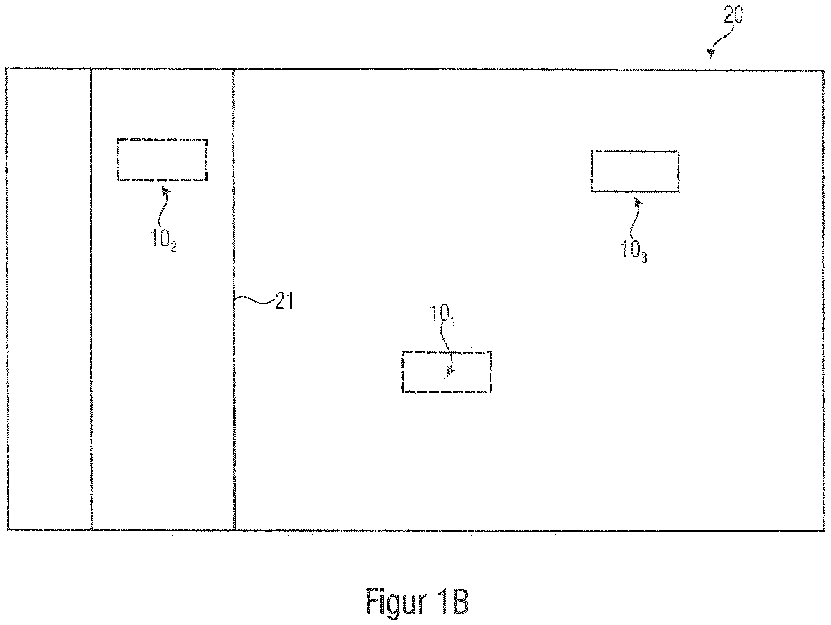

Die Figuren 1A und 1B zeigen eine erfindungsgemäße Vorrichtung 10 (Figur 1A) zur Fälschungssicherung eines Produkts 20 (Figur 1B) und/oder zum Speichern von Kryptoinformationen, was wiederum zur Fälschungssicherung des Produkts 20 genutzt werden kann.

Die Vorrichtung 10 weist einen Mikrochip 11 auf. Der Mikrochip 11 weist eine integrierte Schaltung 12 auf. Die integrierte Schaltung 12 ist kapazitiv und kontaktlos auslesbar. Der Mikrochip 11 weist eine erste Chipseite 11A und eine gegenüberliegend angeordnete zweite Chipseite 11B auf. Auf der ersten Chipseite 11A des Mikrochips 11 ist eine erste Metallisierungsschicht 13 angeordnet. Auf der gegenüberliegenden zweiten Chipseite 11B des Mikrochips 11 ist eine zweite Metallisierungsschicht 14 angeordnet. Die Metallisierungsschichten 13, 14 können beispielsweise durch Sputtern oder Aufdampfen mittels CVD-Prozessen oder ähnlichem auf die jeweilige Chipseite 11A, 11B aufgebracht beziehungsweise abgeschieden werden.

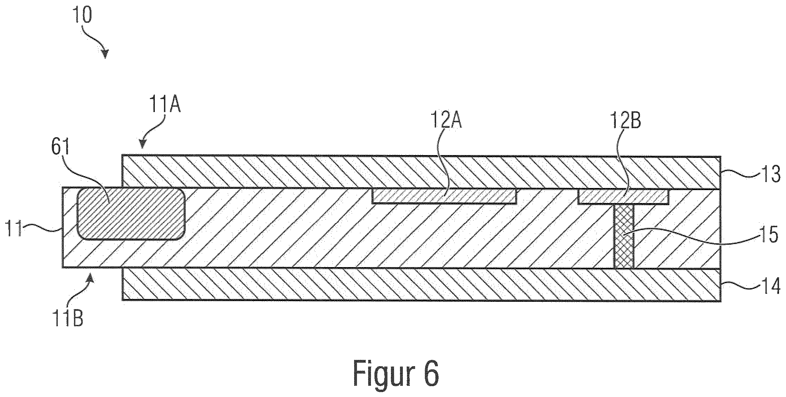

Erfindungsgemäß weist die Vorrichtung 10 außerdem eine (hier nicht dargestellte) Fotodiode auf, die nachfolgend unter Bezugnahme auf Figur 6 näher erläutert wird.

Die beiden Metallisierungsschichten 13, 14 sind jeweils elektrisch mit der integrierten Schaltung 12 gekoppelt. Jede Metallisierungsschicht 13, 14 dient als eine Elektrode zum kapazitiven Auslesen der integrierten Schaltung 12. Hierfür kann die integrierte Schaltung 12 beispielsweise einen Speicher, insbesondere einen nicht flüchtigen Speicher, aufweisen. Auf dem Speicher kann ein Datensatz gespeichert werden, der eine Authentifizierung des Mikrochips 11 und somit des Produkts 20 erlaubt, an dem beziehungsweise in dem der Mikrochip 11 angeordnet beziehungsweise integriert ist. Ein solcher Datensatz kann beispielsweise einen eindeutigen Code in Form von Zahlen und/oder Buchstaben, wie beispielsweise eine fortlaufende Seriennummer, aufweisen. Unter dem Auslesen der integrierten Schaltung 12 kann demnach insbesondere das Auslesen eines solchen Speichers verstanden werden.

Die Vorrichtung 10, beziehungsweise der Mikrochip 11, kann an dem Produkt 20, das gegen Fälschung gesichert werden soll, fixierbar oder in das Produkt 20 integrierbar sein. Figur 1B zeigt einige Beispiele hierfür.

Figur 1B zeigt eine Banknote als ein nicht limitierendes Beispiel für ein Produkt 20, das mit dem erfindungsgemäßen Konzept gegen Fälschung gesichert werden kann. Beispielsweise kann die Vorrichtung teilweise oder vollständig in das Produkt 20 integriert sein, was mit der Vorrichtung 10₁ schematisch dargestellt ist. Demnach ist die Vorrichtung 10, von dem Produkt 20 teilweise oder vollständig bedeckt. In dem hier abgebildeten Beispiel ist die Vorrichtung 10₁ vollständig in das Produkt 20 integriert und somit vollständig von dem Produkt 20 bedeckt, weshalb die Vorrichtung 10₁ von außen nicht sichtbar und daher in Strichlinien dargestellt ist. Die erste und die zweite Metallisierungsschicht 13, 14 sind hierbei ebenfalls vollständig von dem Produkt 20 bedeckt.

Das Produkt 20 kann weitere Bestandteile aufweisen, die ebenfalls Teil des Produkts 20 sind, beziehungsweise dem Produkt 20 zugehörig sind. So kann beispielsweise die beispielhaft abgebildete Banknote 20 ein oder mehrere Sicherheitsmerkmale 21 aufweisen, die Teil der Banknote 20 sind. Solche Sicherheitsmerkmale 21 können beispielsweise Polymerstreifen, Hologramme und dergleichen mehr sein. Ein solcher Teil des Produkts 20 kann demnach ein dem Produkt 20 zugehöriger Abschnitt 21 des Produkts 20 sein. Gemäß einem solchen denkbaren Ausführungsbeispiel kann die erfindungsgemäße Vorrichtung teilweise oder vollständig von einem solchen Abschnitt 21 des Produkts 20 bedeckt sein, was mit der Vorrichtung 10₂ schematisch dargestellt ist. Die Vorrichtung 10₂ ist beispielhaft von einem solchen Abschnitt 21, zum Beispiel einem Sicherheitsmerkmal in Form eines Polymerstreifens, bedeckt. Dieses Sicherheitsmerkmal überdeckt die Vorrichtung 10₂ in diesem Beispiel vollständig, weshalb die Vorrichtung 10₂ von außen nicht sichtbar und daher in Strichlinien dargestellt ist. Dabei kann eine der beiden Metallisierungsschichten 13, 14 jeweils mit dem Produkt 20 in Kontakt sein, und die jeweils andere der beiden Metallisierungsschichten 13, 14 kann von dem Abschnitt 21 des Produkts 20 teilweise oder vollständig bedeckt sein.

Gemäß den oben beispielhaft beschriebenen Ausführungsformen kann also insbesondere der Mikrochip 11 derart an dem Produkt 20 fixierbar beziehungsweise in das Produkt 20 integrierbar sein, dass zumindest eine der beiden Metallisierungsschichten 13, 14 von einem Abschnitt 21 des Produkts 20 bedeckt ist. Die zumindest eine Metallisierungsschicht 13, 14 kann teilweise oder vollständig von dem Abschnitt 21 des Produkts 20 bedeckt sein. Wie bereits eingangs erwähnt, können die beiden Metallisierungsschichten 13, 14 jeweils als eine Elektrode zum kapazitiven Auslesen der integrierten Schaltung 12 dienen. Hierfür kann eine Gegenelektrode, die beispielsweise an einem Lesegerät angeordnet sein kann, in die Nähe der jeweiligen Metallisierungsschicht 13, 14 gebracht werden. Ein die jeweilige Metallisierungsschicht 13, 14 bedeckender Teil des Produkts 20 kann dabei als Dielektrikum dienen.

Alternativ kann die Vorrichtung außen an dem Produkt 20 angeordnet sein, was mit der Vorrichtung 10₃ schematisch dargestellt ist. Hierbei wäre beispielsweise eine der beiden Metallisierungsschichten 13, 14 mit einer Oberfläche des Produkts 20 in Kontakt und die jeweils andere der beiden Metallisierungsschichten 13, 14 würde außen am Produkt 20 freiliegend angeordnet sein. Um die freiliegende Metallisierungsschicht 13, 14 zu schützen könnte in diesem Fall ein zusätzliches Material an der Vorrichtung 10₃, und insbesondere auf der jeweiligen Metallisierungsschicht 13, 14 angeordnet sein.

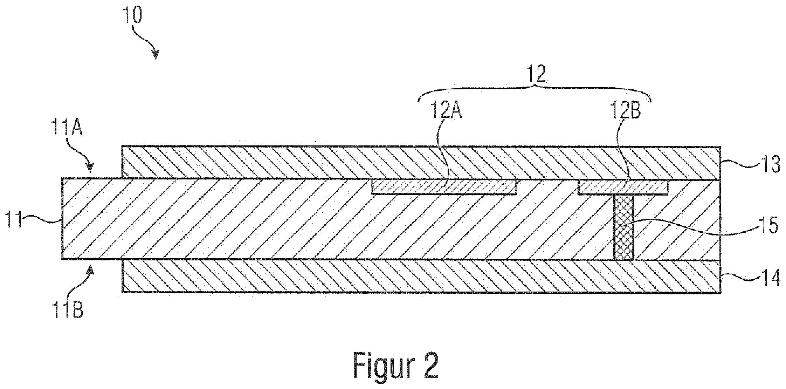

Figur 2 zeigt ein weiteres Ausführungsbeispiel einer erfindungsgemäßen Vorrichtung 10. Auch hier weist die Vorrichtung 10 erfindungsgemäß eine (hier nicht dargestellte) Fotodiode auf, die nachfolgend unter Bezugnahme auf Figur 6 näher erläutert wird.

Die erste Metallisierungsschicht 13 ist auf der ersten Chipseite 11A angeordnet. Die zweite Metallisierungsschicht 14 ist auf der der ersten Chipseite 11A gegenüberliegenden zweiten Chipseite 11B angeordnet. Der Mikrochip 11 weist also eine beidseitige Metallisierung auf.

Die erste Metallisierungsschicht 13 kann als eine erste Elektrode dienen. Die zweite Metallisierungsschicht 14 kann als eine zweite Elektrode dienen. Hierfür können die erste und die zweite Metallisierungsschicht 13, 14 jeweils mit der integrierten Schaltung 12 elektrisch gekoppelt sein.

In dem hier abgebildeten Beispiel weist die integrierte Schaltung 12 einen ersten elektrischen Kontakt bzw. Pol 12A und einen zweiten elektrischen Kontakt bzw. Pol 12B auf. Die erste Metallisierungsschicht 13 kann mit dem ersten elektrischen Pol 12A, und die zweite Metallisierungsschicht 14 kann mit dem zweiten elektrischen Pol 12B verbunden sein.

Wie zu erkennen ist, können beide elektrischen Pole 12A, 12B auf derselben Chipseite, hier beispielhaft auf der ersten Chipseite 11A, angeordnet sein. Zur elektrischen Kontaktierung der zweiten Metallisierungsschicht 14 kann der Mikrochip 11 eine sich zwischen der ersten Chipseite 11A und der zweiten Chipseite 11B erstreckende Durchkontaktierung 15 aufweisen. Diese Durchkontaktierung 15 kann beispielsweise als ein TSV (engl.: Through Silicon Via) ausgestaltet sein. Die zweite Metallisierungsschicht 14 ist mittels dieser Durchkontaktierung 15 mit dem auf der gegenüberliegenden ersten Chipseite 11A angeordneten zweiten Kontakt bzw. Pol 12B elektrisch verbunden.

Die erste Metallisierungsschicht 13 kann die erste Chipseite 11A teilweise oder vollständig bedecken. Die zweite Metallisierungsschicht 14 kann die zweite Chipseite 11B teilweise oder vollständig bedecken.

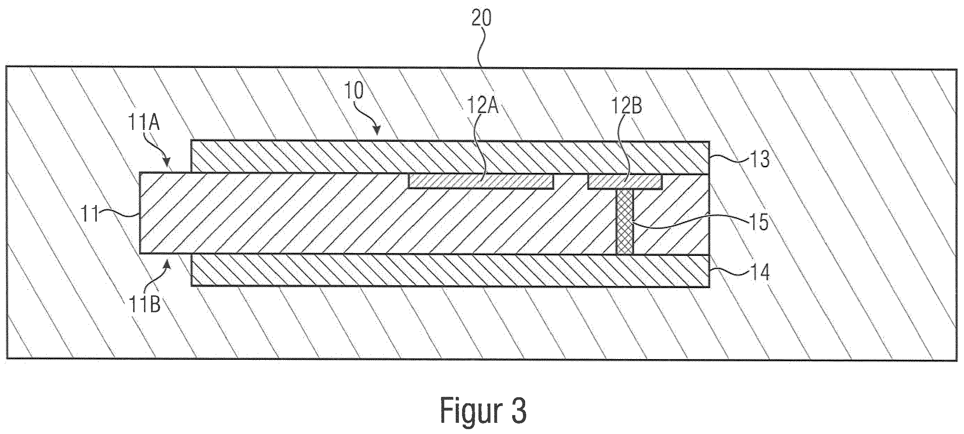

Figur 3 zeigt ein weiteres Ausführungsbeispiel, wobei die zuvor mit Bezug auf Figur 2 beschriebene Vorrichtung 10 in einem gegen Fälschung zu sichernden Produkt 20 integriert ist. Auch in diesem Ausführungsbeispiel weist die Vorrichtung 10 erfindungsgemäß eine (hier nicht dargestellte) Fotodiode auf, die nachfolgend unter Bezugnahme auf Figur 6 näher erläutert wird.

Wie zu erkennen ist, ist die erste Chipseite 11A des Mikrochips 11 im Wesentlichen parallel zu einer ersten Seite 20A des Produkts 20 angeordnet. Die zweite Chipseite 11B des Mikrochips 11 ist im Wesentlichen parallel zu einer der ersten Seite 20A des Produkts 20 gegenüberliegenden zweiten Seite 20B des Produkts 20 angeordnet.

Außerdem ist die erste Chipseite 11A des Mikrochips 11 der ersten Seite 20A des Produkts 20 gegenüberliegend angeordnet. Die zweite Chipseite 11B des Mikrochips 11 ist der zweiten Seite 20B des Produkts 20 gegenüberliegend angeordnet.

Somit ist das kapazitive Auslesen der integrierten Schaltung 12 des Mikrochips 11 von beiden Seiten des Produkts 20 möglich.

In diesem Ausführungsbeispiel sind beide Metallisierungsschichten 13, 14 von jeweils einem Teil des Produkts 20 bedeckt. Dabei ist die auf der ersten Chipseite 11A angeordnete erste Metallisierungsschicht 13 von einem auf der ersten Seite 20A des Produkts 20 angeordneten Teil des Produkts 20 bedeckt. Die auf der zweiten Chipseite 11B angeordnete zweite Metallisierungsschicht 14 ist hingegen von einem auf der zweiten Seite 20B des Produkts 20 angeordneten Teil des Produkts 20 bedeckt.

Wie eingangs bereits erwähnt, kann es sich bei dem Teil des Produkts 20 um das Produkt 20 selbst, oder um einen zu dem Produkt 20 zugehörigen Abschnitt 21 (z.B. Polymerstreifen, Hologram, etc.) handeln.

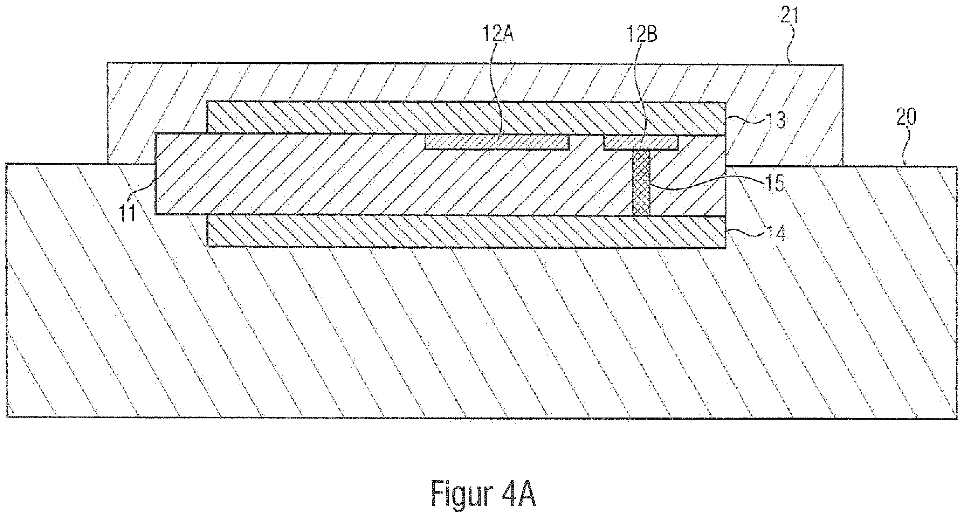

Figur 4A zeigt ein Ausführungsbeispiel, bei dem die Vorrichtung 10 teilweise in das Produkt 20 integriert ist, und wobei zumindest eine Metallisierungsschicht, in diesem Beispiel die auf der ersten Chipseite 11A angeordnete erste Metallisierungsschicht 13, von einem Abschnitt 21 des Produkts 20 bedeckt ist, wobei dieser Abschnitt 21 beispielhaft als ein Sicherheitsmerkmal einer Banknote 20 abgebildet ist.

Dieses Sicherheitsmerkmal 21 kann beispielsweise ein Polymerstreifen sein. In diesem Ausführungsbeispiel bedeckt der Abschnitt 21 die erste Metallisierungsschicht 13 vollständig. Es ist aber ebenso denkbar, dass der Abschnitt 21 die erste Metallisierungsschicht 13 nur teilweise bedeckt. Der Abschnitt 21 bildet in diesem Beispiel ein Dielektrikum.

Die zwei Metallisierungsschichten 13, 14 aufweisende Vorrichtung 10 kann auch dann teilweise oder vollständig von einem Abschnitt 21, zum Beispiel einem Sicherheitsmerkmal, des Produkts 20 bedeckt sein, wenn die Vorrichtung 10 nicht, wie in Figur 4A beispielhaft abgebildet, teilweise oder vollständig in dem Produkt 20 integriert, sondern an einer Oberfläche des Produkts 20 angeordnet bzw. fixiert ist.

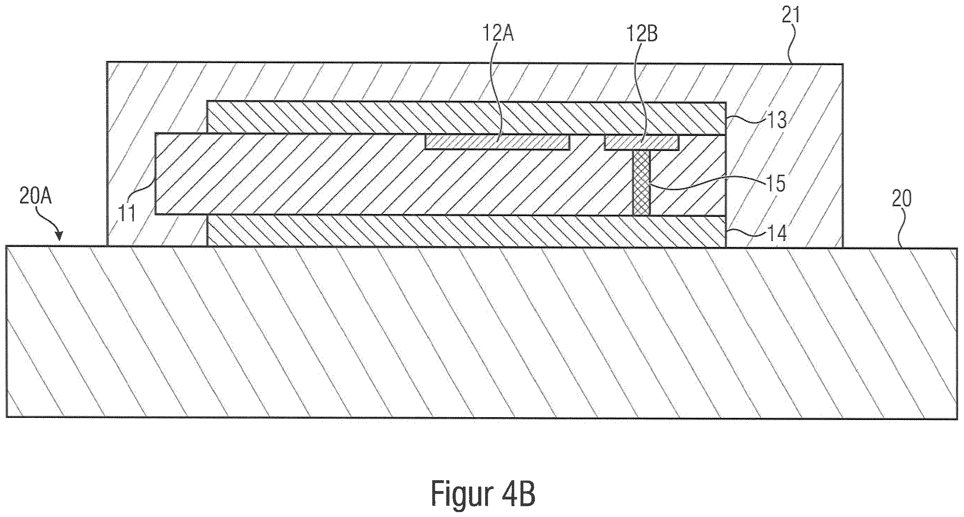

Dies ist beispielhaft in Figur 4B gezeigt. Hier ist die Vorrichtung 10 an einer Oberfläche beziehungsweise einer ersten Seite 20A des Produkts 20 angeordnet und von einem Abschnitt 21 des Produkts 20 bedeckt. Der Abschnitt 21 kann die Vorrichtung 10 teilweise, oder wie hier abgebildet, vollständig bedecken. In anderen Worten ist zumindest eine der beiden Metallisierungsschichten 13, 14 von dem Abschnitt 21 des Produkts 20 bedeckt.

Die erfindungsgemäße Vorrichtung 10, die zwei gegenüberliegend angeordnete Metallisierungsschichten 13, 14 aufweist, bietet den Vorteil, dass die integrierte Schaltung 12 von beiden Seiten 20A, 20B des Produkts 20 kapazitiv berührungslos ausgelesen werden kann.

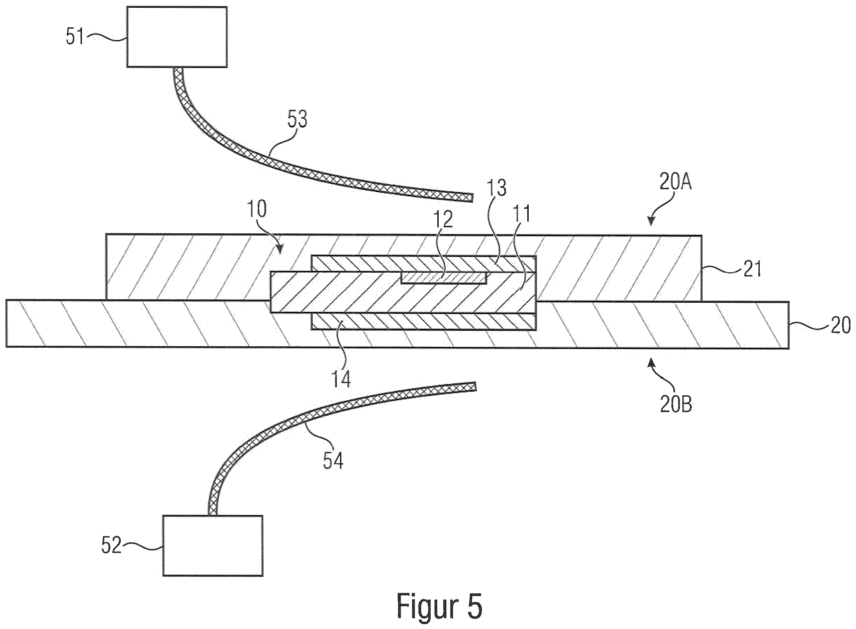

Ein solches Beispiel ist in Figur 5 gezeigt. Hier ist beispielhaft die zuvor mit Bezug auf Figur 4 beschriebene Vorrichtung 10 abgebildet, die in einer Banknote 20 zumindest teilweise integriert und von einem Sicherheitsmerkmal 21 der Banknote 20 vollständig bedeckt ist.

Figur 5 zeigt ferner einen Ausschnitt einer Maschine zum Prozessieren beziehungsweise Handhaben der Banknote 20. Hierbei kann es sich beispielsweise um einen Geldzählautomaten handeln.

Der Geldzählautomat kann mindestens eine erste Handhabungsvorrichtung 51 aufweisen. In dem hier abgebildeten Beispiel weist der Geldzählautomat ferner eine der ersten Handhabungsvorrichtung 51 gegenüberliegend angeordnete zweite Handhabungsvorrichtung 52 auf. Diese Handhabungsvorrichtungen 51, 52 können beispielsweise als Greifarme ausgestaltet sein.

Mindestens eine, vorzugsweise beide, der ersten und zweiten Handhabungsvorrichtungen 51, 52 können einen Metall aufweisenden Bereich 53, 54 aufweisen. Wie zu erkennen ist, ist der Metall aufweisende Bereich 53 der ersten Handhabungsvorrichtung 51 beim Handhaben des Produkts 20 (z.B. Zählen des Geldscheins 20) teilweise, vorzugsweise vollständig, mit der auf der ersten Chipseite 11A angeordneten ersten Metallisierungsschicht 13 örtlich überlagert. In anderen Worten liegt der Metall aufweisende Bereich 53 der ersten Handhabungsvorrichtung 51, beim Handhaben des Produkts 20, der auf der ersten Chipseite 11A angeordneten ersten Metallisierungsschicht 13 teilweise, vorzugsweise vollständig, gegenüber.

Selbiges gilt analog für die zweite Handhabungsvorrichtung 52. Der Metall aufweisende Bereich 54 der zweiten Handhabungsvorrichtung 52 ist beim Handhaben des Produkts 20 teilweise, vorzugsweise vollständig, der auf der zweiten Chipseite 11B angeordneten zweiten Metallisierungsschicht 14 örtlich überlagert. In anderen Worten liegt der Metall aufweisende Bereich 54 der zweiten Handhabungsvorrichtung 52, beim Handhaben des Produkts 20, der auf der zweiten Chipseite 11B angeordneten zweiten Metallisierungsschicht 14 teilweise, vorzugsweise vollständig, gegenüber.

Der Metall aufweisende Bereich 53 der ersten Handhabungsvorrichtung 51, beziehungsweise der Metall aufweisende Bereich 54 der zweiten Handhabungsvorrichtung 52, dient jeweils als Gegenelektrode zum kapazitiven Koppeln mit der jeweils als Elektrode ausgestalteten ersten bzw. zweiten Metallisierungsschicht 13, 14. Der die jeweilige Metallisierungsschicht 13, 14 bedeckende Teil des Produkts 20 dient dabei als Dielektrikum zwischen der jeweiligen als Elektrode ausgestalteten Metallisierungsschicht 13, 14 und dem jeweils als Gegenelektrode ausgestalteten Metall aufweisenden Bereich 53, 54 der jeweiligen Handhabungsvorrichtung 51, 52.

Somit kann die integrierte Schaltung 12 kapazitiv berührungslos ausgelesen werden. Berührungslos bezieht sich hierbei insbesondere auf eine Berührung zwischen Elektrode und Gegenelektrode, d.h. zwischen der jeweiligen Metallisierungsschicht 13, 14 und dem jeweiligen Metall aufweisenden Bereich 53, 54.

Berührungslos kann sich aber auch auf eine Berührung zwischen dem Produkt 20 und einer Gegenelektrode, d.h. zwischen dem Produkt 20 beziehungsweise einem Abschnitt 21 des Produkts 20, und dem jeweiligen Metall aufweisenden Bereich 53, 54 beziehen. In Figur 5 ist dies schematisch dadurch angedeutet, dass die jeweiligen Metall aufweisenden Bereiche 53, 54 der jeweiligen Handhabungsvorrichtung 51, 52 von dem Produkt 20 beabstandet sind. Das kapazitive Auslesen der integrierten Schaltung 12 kann demnach kontaktlos erfolgen.

Dieses kapazitive Auslesen unterscheidet sich von einer Übertragung von Funkwellen mittels Antennen, wobei diese Antennen als Mikrochip-externe Antennen mit Kontakten des Mikrochips verbunden werden. Die erfindungsgemäße Vorrichtung 10 weist hingegen eine in den Mikrochip 11 integrierte kapazitive Antenne auf, d.h. die Vorrichtung 10 kann ohne eine Mikrochip-externe Antenne ausgeführt sein. Dabei können die erste und die zweite Metallisierungsschicht 13, 14 eine in den Mikrochip 11 integrierte kapazitive Antenne bilden.

Erfindungsgemäß weist die Maschine außerdem einen (hier nicht dargestellten) Lichtemitter zum Aussenden von Lichtblitzen auf, die von einer in der Vorrichtung 10 integrierten Fotodiode registriert werden können. Die Lichtblitze werden n einer vorbestimmten Reihenfolge und/oder in einer vorbestimmten Frequenz und/oder in einem vorbestimmten Wellenlängenbereich ausgesendet. Hierzu sei auf Figur 6 verwiesen.

Figur 6 zeigt ein weiteres Ausführungsbeispiel einer erfindungsgemäßen Vorrichtung 10. Die Vorrichtung 10 entspricht im Wesentlichen der zuvor mit Bezug auf Figur 2 beschriebenen Vorrichtung, jedoch mit dem Unterschied, dass zusätzlich eine Fotodiode 61 vorgesehen ist.

Die Fotodiode 61 kann in dem Mikrochip 11 integriert sein. Die Fotodiode 61 kann auf der ersten Chipseite 11A oder auf der zweiten Chipseite 11B angeordnet sein. Alternativ können zwei Fotodioden 61 vorgesehen sein, wobei eine erste Fotodiode 61 auf der ersten Chipseite 11A, und eine zweite Fotodiode 61 auf der zweiten Chipseite 11B angeordnet sind.

Die Fotodiode 61 ist mit der integrierten Schaltung 12 gekoppelt, wobei die integrierte Schaltung 12 eine Steuerroutine zum Betreiben der Fotodiode 61 aufweisen kann. Die integrierte Schaltung 12 ist ausgestaltet, um das kapazitive Auslesen der integrierten Schaltung 12 nur dann zu ermöglichen, wenn die Fotodiode 61 Lichtblitze in einer vorbestimmten Reihenfolge, und/oder in einer vorbestimmten Frequenz, und/oder oder in einem vorbestimmten Wellenlängenbereich registriert.

Die Lichtblitze werden von dem zuvor erwähnten Lichtemitter ausgesendet, der in der, unter Bezugnahme auf Figur 5 beschriebenen, Maschine zum Handhaben des Produkts 20 angeordnet ist. Beispielsweise kann ein solcher Emitter in einem zuvor mit Bezug auf Figur 5 beispielhaft beschriebenen Geldzählautomaten vorgesehen sein.

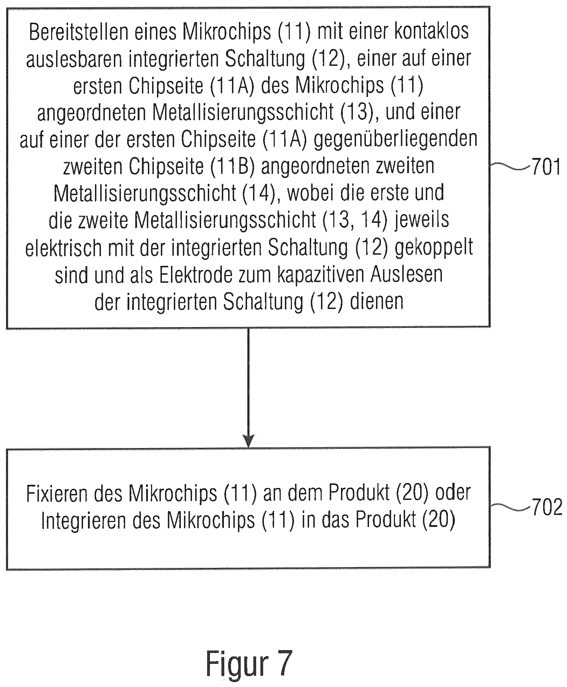

Figur 7 zeigt ein schematisches Blockdiagramm eines erfindungsgemäßen Verfahrens zum Schutz eines Produkts 20 gegen Fälschung gemäß einem Ausführungsbeispiel.

In Block 701 wird ein Mikrochip 11 mit einer kontaktlos auslesbaren integrierten Schaltung 12, einer auf einer ersten Chipseite 11A des Mikrochips 11 angeordneten ersten Metallisierungsschicht 13 und einer auf einer gegenüberliegenden zweiten Chipseite 11B angeordneten zweiten Metallisierungsschicht 14 bereitgestellt, wobei die erste und die zweite Metallisierungsschicht 13, 14 jeweils elektrisch mit der integrierten Schaltung 12 gekoppelt sind und jeweils als Elektroden zum kapazitiven Auslesen der integrierten Schaltung 12 dienen.

In Block 702 wird der Mikrochip 11 an dem Produkt 20 fixiert, oder der Mikrochip 11 wird in das Produkt 20 integriert. Zudem wird in Schritt 702 eine Fotodiode 61 bereitgestellt, die elektrisch mit der integrierten Schaltung 12 gekoppelt ist, wobei die integrierte Schaltung 12 ausgestaltet ist, um das kapazitive Auslesen nur dann zu ermöglichen, wenn die Fotodiode 61 Lichtblitze in einer vorbestimmten Reihenfolge und/oder in einer vorbestimmten Frequenz und/oder in einem vorbestimmten Wellenlängenbereich registriert Zusammenfassend kann also die erfindungsgemäße Vorrichtung 10 gemäß einem Ausführungsbeispiel vollständig in das Produkt 20 integrierbar sein (siehe z.B. Figur 3). In diesem Fall können die erste und die zweite Metallisierungsschicht 13, 14 jeweils vollständig von dem Produkt 20 bedeckt sein. Gemäß einem weiteren Ausführungsbeispiel kann die Vorrichtung 10 an dem Produkt 20 anordenbar oder fixierbar sein (siehe z.B. Figur 4B). in diesem Fall kann zumindest eine der beiden Metallisierungsschichten 13, 14 teilweise oder vollständig von einem Teil des Produkts 20 bedeckt sein. Ein Teil des Produkts 20 kann das Produkt 20 selbst, oder ein dem Produkt 20 zugehöriger Abschnitt 21 des Produkts 20, z.B. ein Sicherheitsmerkmal (Polymerstreifen, etc.), sein. Gemäß einem weiteren Ausführungsbeispiel kann die Vorrichtung 10 zumindest teilweise in das Produkt 20 integrierbar sein (siehe z.B. Figur 4A). Auch in diesem Fall kann zumindest eine der beiden Metallisierungsschichten 13, 14 teilweise oder vollständig von einem Teil des Produkts 20 bedeckt sein.

Nachfolgend soll die vorliegende Erfindung nochmals in anderen Worten zusammengefasst werden:
Die Erfindung betrifft unter anderem einen mikroelektronischen Chip 11, der insbesondere als weiteres Sicherheitsmerkmal in flache, blattförmige Gegenstände 20 einbettbar ist.

Dazu zählen beispielsweise Papiere wie sie für den Dokumenten- Wertpapier- und/oder Geldscheindruck verwendet werden.

### Technisches Problem der Erfindung

Geldscheine waren und sind stets Ziel von Fälschungen. Um das zu verhindern gibt es eine Vielzahl von Sicherheitsmerkmalen, die in Geldscheinen integriert sind. Bisher sind keine elektronischen Sicherheitsmerkmale in Geldscheinen realisiert worden, weil die Integrationskosten bis dato zu hoch waren.

Bei Zählautomaten für Geldscheine werden von einem Stapel von Geldscheinen durch zwei Greifer nacheinander einzelne Geldscheine abgenommen und auf einen anderen Stapel abgelegt. Während dieser Zähl- bzw. Umstapelphase steht pro Geldschein nur eine kurze Zeit von typisch 0,025 Sekunden bzw. 25 ms zur Verfügung. In dieser Zeit sollte ein Geldschein gezählt, auf Echtheit geprüft und seine Seriennummer ausgelesen werden. Vorhandene Technologien mit Dipolantennen oder Antennenspulen zum berührungslosen Auslesen von RFID Chipkarten benötigen jedoch mehr Zeit.

Bisherige Versuche Siliziumchips in Papier, speziell in Geldscheine, zu integrieren, scheitern an der Anforderung, dass die Antenne (Spule oder Dipol) mit Kontaktpads auf dem Chip kontaktiert werden muss. Durch die hohe Beweglichkeit oder den kleinen Biegeradius von Geldscheinen im Gebrauch delaminieren diese Kontakte und reißen auf.

Um Antennen mit dem Chip elektrisch zu verbinden sind aufwendige und teure Prozessschritte bei der Produktion notwendig. Der Aufwand zur genauen Platzierung des Chips relativ zur Antenne ist zu teuer. In Veröffentlichung der deutschen Bundesbank ist die Problematik beschrieben worden.

### Lösungsweg gemäß der Erfindung

Anstatt wie bisher die Kopplung des Chips zum Lesegerät mit einer Dipolantenne oder Antennenspule mit elektromagnetischen Funkwellen über einen Abstand von einigen Zentimetern zu machen, soll erfindungsgemäß eine kapazitive Kopplung von ein oder zwei Metallflächen 13, 14 auf den Chipoberflächen 11A, 11B zu den sehr nahe liegenden Greifern 51, 52 zum Greifen eines mit dem Chip 11 ausgestatteten Produkts 20 erfolgen.

Diese Metallflächen 13, 14 können die Ober- bzw. Unterseite 11A, 11B des Chips 11 jeweils in Gänze oder als eine weitere Ausführungsform der Erfindung auch nur partiell bedecken.

Der Abstand der Greifer 51, 52 zu den Metallflächen 13, 14 auf den Chipoberflächen 11A, 11B wird typischerweise weniger als einen Millimeter betragen. Die Fläche der Metallisierung 13, 14 auf dem Chip 11 kann gemäß einer beispielhaften Ausführungsform im Wesentlichen der Fläche des Chips 11 entsprechen. Es können sowohl die Vorderseite 11A, als auch die Rückseite 11B des Chips 11 metallisiert und mit den zwei Polen 12A, 12B des Chips 11 verbunden werden. Dabei kann die Metallfläche 13 auf der Vorderseite 11A mit dem ersten Kontakt 12A des RFID-Chips 11 verbunden werden. Die zweite Metallfläche 14 auf der Rückseite 11B kann durch eine Durchkontaktierung 15 durch den Chip 11 mit einem zweiten Kontakt 12B des RFID-Chips 11 verbunden werden.

Im physikalischen Sinne kann dies auch einen Dipol darstellen, der jedoch im Gegensatz zu normalen Dipolen sehr kurze und breite Arme hat.

Der Chip 11 sendet seine in ihm gespeicherte Information bei Abfrage an das Auslesegerät. Diese Information kann beispielsweise die Seriennummer, aber auch jegliche andere insbesondere eindeutige Information sein. Es kann insbesondere auch eine verschlüsselte Sicherheitsinformation sein. Die Dicke des Chips 11 kann beispielsweise zwischen 50 µm und 10 µm liegen, und beispielsweise 0,03 mm oder 30 µm betragen. Der ansonsten starre und spröde Siliziumchip 11 ist flexibel und biegbar, weil er so dünn ist. Durch die beidseitige Metallisierung 13, 14 ist ein erhöhter Aufwand notwendig, wenn ein Fälscher die Eigenschaften des Chips 11 erkennen will, um ihn nachzubauen.

Der Chip 11 mit seiner Metallisierung 13, 14 kann im Bereich eines auf einem Geldschein 20 angeordneten Polymerstreifens 21 auf dem Geldschein 20 platziert sein. Dabei sind nur geringe Anforderungen an die Genauigkeit der Platzierung erforderlich. Eine Ungenauigkeit von Millimetern ist tolerierbar, weil die Gegenelektroden 53, 54 auf den zwei Greifern 51, 52 groß gestaltet werden können. Während der Chip 11 und damit die Metallflächen 13, 14 typischerweise jeweils eine Kantenlänge von 1 mm oder kleiner aufweisen können, können die Gegenelektroden 53, 54 deutlich größer sein, bis zu 10 mm oder mehr.

Mit dieser Anordnung kann ein Geldschein 20 auch zuverlässig erkannt und ausgelesen werden, wenn er bei dem hohen Tempo der Zählmaschine infolge unvermeidbarer Ungenauigkeiten bzw. Toleranzen etwas seitlich zu liegen kommt. Der enge Spalt zwischen den Gegenelektroden 53, 54 auf den Greifern 51, 52 und den Metallisierungen 13, 14 auf dem Chip 11 kann vorteilhafter Weise nur durch die Überdeckung mit Papier oder Polymer und einem Luftspalt gegeben sein. Durch den engen Spalt und eine relativ große Fläche der kapazitiven Kopplung ist eine hohe Qualität der Übertragung mit geringen Störeinflüssen gegeben. Dadurch ist eine hohe Übertragungsrate und kurze Auslesezeit möglich.

In einem Ausführungsbeispiel kann aufgrund des Verzichts auf Antennen, die wiederum aus einem zusätzlichen Material bestehen und mit dem Chip 11 kontaktiert werden müssten, die Herstellung wesentlich vereinfacht und damit kostengünstiger gestaltet werden. Es kommt nicht auf eine präzise Positionierung des Chips 11 an. Es ist auch unproblematisch, wenn der Chip 11 in seiner Orientierung verdreht ist, weil er nur durch die zwei gegenüberliegenden Metallflächen 13, 14 mit der Außenwelt in Verbindung tritt. Auch ein Umdrehen, also Vertauschen von Ober- und Unterseite 11A, 11B des Chips 11 ist unproblematisch, weil die kapazitive Kopplung mittels Wechselstrom erfolgen kann. Neben Geldscheinen 20 können auch andere wertvolle Dokumente wie Ausweise, Urkunden, Wertpapiere Eintrittskarten usw. auf diese Weise geschützt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

## Patentansprüche

1. Vorrichtung (10) zur Verwendung als Sicherheitsmerkmal in einem blattförmigen Produkt (20), wobei die Vorrichtung (10) aufweist:
einen Mikrochip (11) mit einer kontaktlos auslesbaren integrierten Schaltung (12),
einer auf einer ersten Chipseite (11A) des Mikrochips (11) angeordneten ersten Metallisierungsschicht (13), und einer auf einer der ersten Chipseite (11A) gegenüberliegenden zweiten Chipseite (11B) angeordneten zweiten Metallisierungsschicht (14),
wobei die erste und die zweite Metallisierungsschicht (13, 14) jeweils elektrisch mit der integrierten Schaltung (12) gekoppelt sind und als Elektroden zum kapazitiven Auslesen der integrierten Schaltung (12) dienen, und
wobei der Mikrochip (11) an dem Produkt (20) fixiert oder in das Produkt (20) integriert ist, **dadurch gekennzeichnet, dass**
die Vorrichtung (10) ferner eine Fotodiode (61) aufweist, die elektrisch mit der integrierten Schaltung (12) gekoppelt ist, wobei die integrierte Schaltung (12) ausgestaltet ist, um das kapazitive Auslesen nur dann zu ermöglichen, wenn die Fotodiode (61) Lichtblitze in einer vorbestimmten Reihenfolge und/oder in einer vorbestimmten Frequenz und/oder in einem vorbestimmten Wellenlängenbereich registriert.

2. Vorrichtung (10) nach Anspruch 1, wobei der Mikrochip (11) derart an dem blattförmigen Produkt (20) fixiert ist, dass zumindest eine der ersten und zweiten Metallisierungsschichten (13, 14) zumindest teilweise von einem Abschnitt (21) des blattförmigen Produkts (20) bedeckt ist,
oder wobei der Mikrochip (11) derart in das blattförmige Produkt (20) integriert ist, dass die erste und die zweite Metallisierungsschicht (13, 14) jeweils vollständig von dem blattförmigen Produkt (20) bedeckt sind.

3. Vorrichtung (10) nach Anspruch 2, wobei der Mikrochip (11) derart in das blattförmige Produkt (20) integriert oder daran fixiert ist, dass die zumindest eine der ersten und zweiten Metallisierungsschichten (13, 14) vollständig von dem Abschnitt (21) des Produkts (20) bedeckt ist.

4. Vorrichtung (10) nach einem der Ansprüche 1 bis 3, wobei die auf der ersten Chipseite (11A) angeordnete erste Metallisierungsschicht (13) mit einem ersten elektrischen Kontakt (12A) der integrierten Schaltung (12) gekoppelt ist, und wobei die auf der zweiten Chipseite (11B) angeordnete zweite Metallisierungsschicht (14) mit einem zweiten elektrischen Kontakt (12B) der integrierten Schaltung (12) gekoppelt ist, wobei der erste und der zweite elektrische Kontakt (12A, 12B) der integrierten Schaltung (12) auf der ersten Chipseite (11A) angeordnet sind, und der Mikrochip (11) eine sich zwischen der ersten und der zweiten Chipseite (11A, 11B) erstreckende Durchkontaktierung (15) aufweist, wobei die auf der zweiten Chipseite (12B) angeordnete zweite Metallisierungsschicht (14) mittels dieser Durchkontaktierung (15) mit dem auf der ersten Chipseite (11A) angeordneten zweiten elektrischen Kontakt (12B) gekoppelt ist.

5. Vorrichtung (10) nach einem der Ansprüche 1 bis 4, wobei ein die erste Metallisierungsschicht (13) bedeckender Teil des Produkts (20) auf einer ersten Seite (20A) des Produkts (20) angeordnet ist, und wobei ein die zweite Metallisierungsschicht (14) bedeckender Teil des Produkts (20) auf einer der ersten Seite (20A) gegenüberliegenden zweiten Seite (20B) des Produkts (20) angeordnet ist.

6. Vorrichtung (10) nach einem der Ansprüche 1 bis 5, wobei die erste Metallisierungsschicht (13) die erste Chipseite (11A) zumindest teilweise bedeckt, oder wobei die erste Metallisierungsschicht (13) die erste Chipseite (11A) vollständig bedeckt, und/oder wobei die zweite Metallisierungsschicht (14) die zweite Chipseite (11B) zumindest teilweise bedeckt, oder wobei die zweite Metallisierungsschicht (14) die zweite Chipseite (11B) vollständig bedeckt.

7. Vorrichtung (10) nach einem der Ansprüche 1 bis 6, wobei die Vorrichtung (10) keine Mikrochip-externe Antenne aufweist.

8. Vorrichtung (10) nach einem der Ansprüche 1 bis 7, wobei die Vorrichtung (10) derart ausgestaltet ist, dass das kontaktlose kapazitive Auslesen der integrierten Schaltung (12) eine Reichweite von unter 10 mm, und vorzugsweise von unter 1 mm aufweist.

9. Vorrichtung (10) nach einem der Ansprüche 1 bis 8, wobei das Produkt (20) Papier und/oder Kunststoff aufweist, oder wobei das Produkt (20) ein Papier aufweist, das zum Druck von Dokumenten und/oder Wertpapieren und/oder Geldscheinen verwendet wird.

10. Vorrichtung (10) nach einem der Ansprüche 1 bis 9, wobei die integrierte Schaltung (12) einen Datenspeicher aufweist, wobei der Datenspeicher mehrfach beschreibbar und/oder auslesbar, aber nicht überschreibbar und/oder löschbar, ist.

11. Verwendung einer Vorrichtung (10) gemäß einem der vorhergehenden Ansprüche als Sicherheitsmerkmal in einem blattförmigen Produkt (20).

12. Maschine zum Handhaben eines eine Vorrichtung (10) gemäß einem der Ansprüche 1 bis 10 aufweisenden blattförmigen Produkts (20),
wobei die Maschine einen ersten Metall aufweisenden Bereich (53) und einen gegenüberliegend angeordneten zweiten Metall aufweisenden Bereich (54) aufweist,
wobei der erste Metall aufweisende Bereich (53) als eine Gegenelektrode zu der als Elektrode dienenden ersten Metallisierungsschicht (13), und der zweite Metall aufweisende Bereich (54) als eine Gegenelektrode zu der als Elektrode dienenden zweiten Metallisierungsschicht (14) zum kapazitiven Auslesen der integrierten Schaltung (12) dient,
wobei zum Auslesen der integrierten Schaltung (12) der erste Metall aufweisende Bereich (53) zumindest abschnittsweise mit der ersten Metallisierungsschicht (13) örtlich überlagerbar ist, und der zweite Metall aufweisende Bereich (54) zumindest abschnittsweise mit der zweiten Metallisierungsschicht (14) örtlich überlagerbar ist, und **dadurch gekennzeichnet, dass**
die Maschine einen Lichtemitter zum Aussenden der Lichtblitze zur Fälschungssicherung des Produkts aufweist.

13. Maschine nach Anspruch 12, wobei die Maschine ein Geldzählautomat und das Produkt ein Geldschein ist.

14. Verfahren zum Erzeugen eines Sicherheitsmerkmals in einem blattförmigen Produkt (20), wobei das Verfahren die folgenden Schritte aufweist:
Bereitstellen eines Mikrochips (11) mit einer kontaktlos auslesbaren integrierten Schaltung (12), einer auf einer ersten Chipseite (11A) des Mikrochips (11) angeordneten ersten Metallisierungsschicht (13) und einer auf einer der ersten Chipseite (11A) gegenüberliegenden zweiten Chipseite (11B) angeordneten zweiten Metallisierungsschicht (14),
wobei die erste und die zweite Metallisierungsschicht (13, 14) jeweils elektrisch mit der integrierten Schaltung (12) gekoppelt sind und als Elektroden zum kapazitiven Auslesen der integrierten Schaltung (12) dienen,
Bereitstellen einer Fotodiode (61), die elektrisch mit der integrierten Schaltung (12) gekoppelt ist, wobei die integrierte Schaltung (12) ausgestaltet ist, um das kapazitive Auslesen nur dann zu ermöglichen, wenn die Fotodiode (61) Lichtblitze in einer vorbestimmten Reihenfolge und/oder in einer vorbestimmten Frequenz und/oder in einem vorbestimmten Wellenlängenbereich registriert, und
Fixieren des Mikrochips (11) an dem Produkt (20) oder Integrieren des Mikrochips (11) in das Produkt (20).

## Claims

1. An apparatus (10) for being used as a security feature in a sheet-like product (20), comprising:
a microchip (11) with an integrated circuit (12) that may be read out in a contactless manner,
a first metallization layer (13) arranged on a first chip side (11A) of the microchip (11), and a second metallization layer (14) arranged on a second chip side (11B) opposite to the first chip side (11A),
wherein the first and second metallization layers (13, 14) are each electrically coupled to the integrated circuit (12) and function as electrodes for a capacitive readout of the integrated circuit (12), and
wherein the microchip (11) is fixed to the product (20) or integrated into the product (20), **characterized in that**
the apparatus (10) further comprises a photodiode (61) that is electrically coupled to the integrated circuit (12), wherein the integrated circuit (12) is configured to enable the capacitive readout only if the photodiode (61) registers light flashes in a predetermined order, and/or in a predetermined frequency, and/or in a predetermined wavelength range.

2. The apparatus (10) according to claim 1, wherein the microchip (11) is fixed to the sheet-like product (20) such that at least one of the first and second metallization layers (13, 14) is at least partially covered by a portion (21) of the sheet-like product (20),
or wherein the microchip (11) is integrated into the sheet-like product (20) such that the first and second metallization layers (13, 14) are each fully covered by the sheet-like product (20).

3. The apparatus (10) according to claim 2, wherein the microchip (11) is integrated into or fixed to the sheet-like product (20) such that the at least one of the first and second metallization layers (13, 14) is fully covered by the portion (21) of the product (20).

4. The apparatus (10) according to any one of claims 1 to 3, wherein the first metallization layer (13) arranged on the first chip side (11A) is coupled to a first electric contact (12A) of the integrated circuit (12), and wherein the second metallization layer (14) arranged on the second chip side (11B) is coupled to a second electric contact (12B) of the integrated circuit (12), wherein the first and second electric contacts (12A, 12B) of the integrated circuit (12) are arranged on the first chip side (11A), and wherein the microchip (11) comprises a via (15) extending between the first and second chip sides (11A, 11B), wherein the second metallization layer (14) arranged on the second chip side (12B) is coupled to the second electric contact (12B) arranged on the first chip side (11A) by means of this via (15).

5. The apparatus (10) according to any one of claims 1 to 4, wherein a part of the product (20) covering the first metallization layer (13) is arranged on a first side (20A) of the product (20), and wherein a part of the product (20) covering the second metallization layer (14) is arranged on a second side (20B) of the product (20) opposite to the first side (20A).

6. The apparatus (10) according to any one of claims 1 to 5, wherein the first metallization layer (13) at least partially covers the first chip side (11A), or wherein the first metallization layer (13) fully covers the first chip side (11A), and/or wherein the second metallization layer (14) at least partially covers the second chip side (11B) or wherein the second metallization layer (14) fully covers the second chip side (11B).

7. The apparatus (10) according to any one of claims 1 to 6, wherein the apparatus (10) does not comprise a microchip-external antenna.

8. The apparatus (10) according to any one of claims 1 to 7, wherein the apparatus (10) is configured such that the contactless capacitive readout of the integrated circuit (12) comprises a range of below 10 mm, and preferably of below 1 mm.

9. The apparatus (10) according to any one of claims 1 to 8, wherein the product (20) comprises paper and/or plastic, or wherein the product (20) comprises paper that is used for printing documents and/or bonds and/or banknotes.

10. The apparatus (10) according to any one of claims 1 to 9, wherein the integrated circuit (12) comprises a data memory, wherein the data memory is writable and/or readable multiple times, but is not overwritable and/or deletable.

11. A use of an apparatus (10) according to any one of the preceding claims as a security feature in a sheet-like product (20).

12. A machine for handling a sheet-like product (20) comprising an apparatus (10) according to any one of claims 1 to 10,
wherein the machine comprises a first region (53) comprising metal and a second region (54) comprising metal arranged opposite thereto,
wherein, for the capacitive readout of the integrated circuit (12), the first region (53) comprising metal functions as a counterelectrode to the first metallization layer (13) functioning as an electrode, and the second region (54) comprising metal functions as a counterelectrode to the second metallization layer (14) functioning as an electrode,
wherein, for the readout of the integrated circuit (12), the first region (53) comprising metal is locally superimposable with the first metallization layer (13) at least in portions, and wherein the second region (54) comprising metal is locally superimposable with the second metallization layer (14) at least in portions, **characterized in that**
the machine comprises a light emitter for emitting the light flashes for securing the product against forgery.

13. The machine according to claim 12, wherein the machine is a money counting device and the product is a banknote.

14. A method for producing a security feature in a sheet-like product (20), the method comprising:
providing a microchip (11) with an integrated circuit (12) that may be read out in a contactless manner, a first metallization layer (13) arranged on a first chip side (11A) of the microchip (11), and a second metallization layer (14) arranged on a second chip side (11B) opposite to the first chip side (11A),
wherein the first and second metallization layers (13, 14) are each electrically coupled to the integrated circuit (12) and function as electrodes for a capacitive readout of the integrated circuit (12),
providing a photodiode (61) that is electrically coupled to the integrated circuit (12), wherein the integrated circuit (12) is configured to enable the capacitive readout only if the photodiode (61) registers light flashes in a predetermined order, and/or in a predetermined frequency, and/or in a predetermined wavelength range, and
fixing the microchip (11) to the product (20) or integrating the microchip (11) into the product (20).

## Revendications

1. Dispositif (10) destiné à être utilisé comme caractéristique de sécurité dans un produit (20) en forme de feuille, dans lequel le dispositif (10) présente:
une micro-puce (11) avec un circuit intégré lisible sans contact (12),
une première couche de métallisation (13) disposée sur une première face de puce (11A) de la micro-puce (11), et une deuxième couche de métallisation (14) disposée sur une deuxième face de puce (11A) opposée à la première face de puce (11B),
dans lequel la première et la deuxième couche de métallisation (13, 14) sont, chacune, couplées électriquement au circuit intégré (12) et servent d'électrodes pour la lecture capacitive du circuit intégré (12), et
dans lequel la micro-puce (11) est fixée au produit (20) ou intégrée dans le produit (20),
**caractérisé par le fait que**
le dispositif (10) présente par ailleurs une photodiode (61) qui est couplée électriquement au circuit intégré (12), où le circuit intégré (12) est conçu pour ne permettre la lecture capacitive que lorsque la photodiode (61) enregistre des éclats de lumière dans un ordre prédéterminé et/ou à une fréquence prédéterminée et/ou dans une plage de longueurs d'onde prédéterminée.

2. Dispositif (10) selon la revendication 1, dans lequel la micro-puce (11) est fixée au produit en forme de feuille (20) de sorte qu'au moins l'une des première et deuxième couches de métallisation (13, 14) soit recouverte au moins partiellement par un segment (21) du produit en forme de feuille,
ou dans lequel la micro-puce (11) est intégrée dans le produit en forme de feuille (20) de sorte que la première et la deuxième couche de métallisation (13, 14) soient, chacune, entièrement recouvertes par le produit en forme de feuille (20).

3. Dispositif (10) selon la revendication 2, dans lequel la micro-puce (11) est intégrée dans le produit en forme feuille (20) ou fixée à ce dernier de sorte que l'au moins une des première et deuxième couches de métallisation (13, 14) soit entièrement recouverte par le segment (21) du produit (20).

4. Dispositif (10) selon l'une des revendications 1 à 3, dans lequel la première couche de métallisation (13) disposée sur la première face de puce (11A) est couplée à un premier contact électrique (12A) du circuit intégré (12), et dans lequel la deuxième couche de métallisation (14) disposée sur la deuxième face de puce (11B) est couplée à un deuxième contact électrique (12B) du circuit intégré (12), dans lequel le premier et le deuxième contact électrique (12A, 12B) du circuit intégré (12) sont disposés sur la première face de puce (11A), et la micro-puce (11) présente un via (15) s'étendant entre la première et la deuxième face de puce (11A, 11B), dans lequel la deuxième couche de métallisation (14) disposée sur la deuxième face de puce (12B) est couplée, au moyen de ce via (15), au deuxième contact électrique (12B) disposé sur la première face de puce (11A).

5. Dispositif (10) selon l'une des revendications 1 à 4, dans lequel une partie du produit (20) recouvrant la première couche de métallisation (13) est disposée sur une première face (20A) du produit (20), et dans lequel une partie du produit (20) recouvrant la deuxième couche de métallisation (14) est disposée sur une deuxième face (20B) opposée à la première face (20A) du produit (20).

6. Dispositif (10) selon l'une des revendications 1 à 5, dans lequel la première couche de métallisation (13) recouvre au moins partiellement la première face de puce (11A), ou dans lequel la première couche de métallisation (13) recouvre entièrement la première face de puce (11A), et/ou dans lequel la deuxième couche de métallisation (14) recouvre au moins partiellement la deuxième face de puce (11B), ou dans lequel la deuxième couche de métallisation (14) recouvre entièrement la deuxième face de puce (11B).

7. Dispositif (10) selon l'une des revendications 1 à 6, dans lequel le dispositif (10) ne présente pas d'antenne externe à la micro-puce.

8. Dispositif (10) selon l'une des revendications 1 à 7, dans lequel le dispositif (10) est conçu de sorte que la lecture capacitive sans contact du circuit intégré (12) présente une portée de moins de 10 mm, et de préférence de moins de 1 mm.

9. Dispositif (10) selon l'une des revendications 1 à 8, dans lequel le produit (20) présente du papier et/ou du plastique, ou dans lequel le produit (20) présente un papier qui est utilisé pour l'impression de documents et/ou de titres et/ou de billets de banque.

10. Dispositif (10) selon l'une des revendications 1 à 9, dans lequel le circuit intégré (12) présente une mémoire de données, dans lequel la mémoire de données peut être écrite et/ou lue plusieurs fois, mais ne peut pas être réinscriptible et/ou effacée.

11. Utilisation d'un dispositif (10) selon l'une des revendications précédentes comme caractéristique de sécurité dans un produit en forme de feuille (20).

12. Machine de manutention d'un dispositif (10) selon l'une des revendications 1 à 10 présentant un produit en forme de feuille (20),
dans laquelle la machine présente une première zone (53) présentant du métal et une deuxième zone (54) présentant du métal disposée de manière opposée,
dans laquelle la première zone présentant du métal (53) sert de contre-électrode à la première couche de métallisation (13) servant d'électrode, et la deuxième zone présentant du métal (54) sert de contre-électrode à la deuxième couche de métallisation (14) servant d'électrode pour la lecture capacitive du circuit intégré (12),
dans laquelle la première zone présentant du métal (53) peut, pour lire le circuit intégré (12), être superposée localement au moins par segments à la première couche de métallisation (13), et la deuxième zone présentant du métal (54) peut être superposée localement au moins par segments à la deuxième couche de métallisation (14), et
**caractérisée par le fait que**
la machine présente un émetteur de lumière destiné à émettre des éclats de lumière destinés à empêcher la contrefaçon du produit.

13. Machine selon la revendication 12, dans laquelle la machine est une machine de comptage de billets de banque et le produit est un billet de banque.

14. Procédé de production d'une caractéristique de sécurité dans un produit en forme de feuille (20), dans lequel le procédé présente les étapes suivantes consistant à:
prévoir une micro-puce (11) avec un circuit intégré (12) lisible sans contact, une première couche de métallisation (13) disposée sur une première face de puce (11A) de la micro-puce (11) et une deuxième couche de métallisation (14) disposée sur une deuxième face de puce (11A) opposée à la première face de puce (11B),
dans lequel la première et la deuxième couche de métallisation (13, 14) sont, chacune, couplées électriquement au circuit intégré (12) et servent d'électrodes pour la lecture capacitive du circuit intégré (12),
prévoir une photodiode (61) qui est couplée électriquement au circuit intégré (12), où le circuit intégré (12) est conçu pour ne permettre la lecture capacitive que lorsque la photodiode (61) enregistre des éclats de lumière dans un ordre prédéterminé et/ou à une fréquence prédéterminée et/ou dans une plage de longueurs d'onde prédéterminée, et
fixer la micro-puce (11) au produit (20) ou intégrer la micro-puce (11) dans le produit (20).
